# EUROPÄISCHE PATENTSCHRIFT

(11) **EP 3 027 545 B1**
(45) Veröffentlichungstag und Bekanntmachung des Hinweises auf die Patenterteilung: **02.07.2025**
(21) Anmeldenummer: 14727456.7
(22) Anmeldetag: 28.05.2014
(51) Int. Cl.: B65H 26/00, B65H 18/00, G05B 19/409

(54) **VERFAHREN FÜR DIE KONTROLLE EINER WICKELVORRICHTUNG**
METHOD FOR MONITORING A WINDING DEVICE
PROCÉDÉ POUR LA COMMANDE D'UN DISPOSITIF DE BOBINAGE

(30) Priorität: 29.07.2013 DE 102013108104
(43) Veröffentlichungstag der Anmeldung: 08.06.2016
(73) Patentinhaber: Windmöller & Hölscher KG, 49525 Lengerich (DE)
(72) Erfinder: OSTENDORF, Michael, 49525 Lengerich (DE); HOFFMANN, Frank, 48268 Greven (DE)
(86) Internationale Anmeldenummer: PCT/EP2014/061018
(87) Internationale Veröffentlichungsnummer: WO 2015/014512

(56) Entgegenhaltungen:
- EP-A1- 2 090 536
- WO-A1-81/02799
- US-A1- 2006 217 831
- US-A1- 2013 008 996
- US-A1- 2013 066 614

## Beschreibung

Die vorliegende Erfindung betrifft ein Verfahren für die Kontrolle einer Wickelvorrichtung sowie eine Kontrollvorrichtung für die Kontrolle einer Wickelvorrichtung.

Grundsätzlich ist es bekannt, dass über Wickelvorrichtungen zum Beispiel Folien auf Wickelhülsen aufgewickelt werden. Somit werden Folienrollen hergestellt, die bei einem entsprechenden Kunden weiter eingesetzt werden können. Das Aufwickeln erfolgt in der Wickelvorrichtung. Um das Aufwickeln kontrollieren zu können, ist üblicherweise zumindest eine Anzeigevorrichtung bzw. eine Kontrollvorrichtung mit einer solchen Anzeigevorrichtung vorgesehen. Die Kontrolle erfolgt dabei über das Anzeigen entsprechender Betriebsparameter der einzelnen Funktionseinheiten auf der Anzeigevorrichtung.

Nachteilhaft bei bekannten Kontrollvorrichtungen sowie bei bekannten Verfahren für die Kontrolle einer Wickelvorrichtung ist es, dass die Kontrolle nur wenig intuitiv bzw. fehlerbehaftet erfolgt. So sind auf unterschiedlichen Ebenen der Anzeige die entsprechenden Informationen enthalten. Dementsprechend ist eine intensive Schulung notwendig, damit das Bedienpersonal mit hoher Sicherheit die Kontrolle der Wickelvorrichtung durchführen kann. Insbesondere in Risikosituationen führt dies dazu, dass möglicherweise falsche Betriebsparameter der Entscheidung zugrunde gelegt werden. Auch ist es möglich, dass auf diese Weise wenig oder schlecht geschultes Bedienpersonal eine fehlerhafte Bedienung der Wickelvorrichtung durchführt. Dokument US2013/008996A1 offenbart ein bekanntes Verfahren für die Kontrolle einer Wickelvorrichtung gemäß dem Oberbegriff des Anspruchs 1.

Es ist Aufgabe der vorliegenden Erfindung, die voranstehend beschriebenen Nachteile zumindest teilweise zu beheben. Insbesondere ist es Aufgabe der vorliegenden Erfindung, auf einfache, schnelle und kostengünstige Art und Weise ein besonders sicheres Verfahren für die Kontrolle der Förderwalze der Wickelvorrichtung zur Verfügung zu stellen.

Die voranstehende Aufgabe wird gelöst durch ein Verfahren mit den Merkmalen des Anspruches 1 sowie eine Kontrollvorrichtung mit den Merkmalen des Anspruches 9. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren erläutert worden sind, selbstverständlich auch im Zusammenhang mit der erfindungsgemäßen Kontrollvorrichtung und jeweils umgekehrt, sodass bezüglich der Offenbarung zu den einzelnen Erfindungsaspekten stets wechselseitig Bezug genommen wird bzw. werden kann.

Erfindungsgemäß erfolgt eine Korrelation in optischer Weise zwischen der relevanten Funktionseinheit und dem wenigstens einen zugehörigen Betriebsparameter. Unter einer schematischen Darstellung ist dabei jede Form der graphischen Darstellung zu verstehen, welche in unterschiedlichsten Abstraktionsgraden eine Funktion als Einheit einer Wickelvorrichtung eindeutig beschreibt bzw. definiert. Dies kann zum Beispiel als Fließbild vorgesehen werden. Die Funktionseinheit einer Wickelvorrichtung ist eine Förderwalze bzw. eine Förderrolle. Typische Betriebsparameter solcher Förderrollen sind die Drehzahlen bzw. die Voreilung, welche sich zwischen zwei benachbarten Förderrollen einstellt. Auch der Anpressdruck, welcher ein Anpressen zwischen zwei Förderwalzen erlaubt, kann ein erfindungsgemäßer Betriebsparameter sein.

Die schematische Darstellung erfolgt auf der Anzeigevorrichtung in gleicher Weise, wie dies auch für die erfassten Betriebsparameter gilt. Unter einer Anzeige neben der schematischen Darstellung der dazugehörigen Funktionseinheit ist eine räumliche Zuordnung des angezeigten Betriebsparameters und der korrelierenden Funktionseinheit zu verstehen. So kann der Betriebsparameter auf der Anzeigevorrichtung zum Beispiel links oder rechts neben der schematischen Darstellung der jeweiligen Funktionseinheit angezeigt werden. Auch eine Anzeige oberhalb oder unterhalb der zugehörigen Funktionseinheit ist im Rahmen der vorliegenden Erfindung denkbar. Vorzugsweise werden sämtliche Betriebsparameter in gleicher örtlicher Korrelation, also zum Beispiel alle links neben der schematischen Darstellung der zugehörigen Funktionseinheit, angezeigt.

Ein erfindungsgemäßes Verfahren erhöht damit die Sicherheit der Kontrolle der Wickelvorrichtung. Dementsprechend kann in graphischem und damit intuitivem Zusammenhang eine Darstellung des jeweiligen Betriebsparameters mit der zugehörigen Funktionseinheit erfolgen. Diese Darstellung folgt auf ein und derselben Anzeigenebene, sodass kein Umschalten durch das Bedienpersonal zwischen unterschiedlichen Anzeigemenüs notwendig ist. Vielmehr wird jeder Betriebsparameter in der optisch zugeordneten Weise einfach und intuitiv mit der jeweiligen Funktionseinheit automatisch durch das Bedienpersonal kombiniert. Ein fehlerhaftes Ablesen und ein daraus resultierendes fehlerhaftes Bedienen der Wickelvorrichtung wird auf diese Weise mit größerer Wahrscheinlichkeit vermieden.

Unter einer Kontrolle einer Wickelvorrichtung ist im Sinne der vorliegenden Erfindung sowohl ein passives Überwachen laufender und erfassender Betriebsparameter, wie auch ein aktiver Eingriff in die Wickelvorrichtung zu verstehen. So ist Kern der vorliegenden Erfindung bereits durch das Erfassen und Anzeigen der Betriebsparameter als Anzeigen der Istwerte dieser Betriebsparameter zu verstehen. Selbstverständlich kann ein Teil der Kontrolle auch einen aktiven Eingriff beinhalten, welcher sozusagen Sollwerte für die jeweiligen Betriebsparameter zur Verfügung stellt. Dementsprechend kann für die Kontrolle auch eine Korrelation zwischen Sollwerten und Istwerten angezeigt werden, die vorzugsweise mit einer Farbcodierung eine noch leichtere und intuitivere Erfassbarkeit von möglicherweise bestehenden Abweichungen erzeugt.

Ein erfindungsgemäßes Verfahren wird insbesondere auf einer Kontrolleinheit als Computerprogrammprodukt, also als Software oder Applikation, ausgeführt. Hierfür ist in einer solchen Kontrolleinheit eine Rechnereinheit für die Ausführung einzelner Programmschritte vorgesehen. Solch eine Kontrolleinheit ist vorzugsweise Teil einer Kontrollvorrichtung für die Kontrolle einer Wickelvorrichtung. So kann eine solche Kontrollvorrichtung auch Aktoren aufweisen, um entsprechende veränderte Sollwerte der Betriebsparameter in Veränderungen an die einzelnen Funktionseinheiten der Wickelvorrichtung weiterzugeben. Dabei kann es sich zum Beispiel um Sollwert-Vorgaben für die Drehzahl von Förderwalzen oder deren Anpressdruck handeln.

Die Betriebsdaten sind spezifisch für die jeweilige Funktionseinheit. So können für jede Funktionseinheit auch zwei oder mehr Betriebsparameter vorgesehen werden. Für jede Funktionseinheit können spezifische und dementsprechend separat und unabhängig erfasste Betriebsparameter zur Verfügung gestellt werden. Um das Erfassen der Betriebsparameter mit einer Kontrollvorrichtung zu ermöglichen sind vorzugsweise Sensoreinheiten mit Sensormittel vorgesehen, welche in der Wickelvorrichtung die entsprechenden Daten an den zugehörigen Funktionseinheiten abgreifen.

Neben der erhöhten Sicherheit in der Bedienung wird gleichzeitig eine schnellere Bedienung mit dieser höheren Sicherheit möglich. Es ist also eine übersichtliche Kontrolle möglich, die schnell und intuitiv und gleichzeitig mit hoher Sicherheit den aktuellen Betriebsstatus einzelner Funktionseinheiten und damit auch der gesamten Wickelvorrichtung erfassbar macht. Vorzugsweise sind sämtliche relevanten Funktionseinheiten der Wickelvorrichtung in einem Anzeigemenü der Anzeigevorrichtung dargestellt.

Neben der reinen Anzeige der Betriebsparameter ist auch eine Eingabe von Sollwerten für diese Betriebsparameter möglich. Hierbei handelt es sich um den aktiven Eingriff in Form einer Kontrolle, zum Beispiel als Steuerung und/oder Regelung der Wickelvorrichtung.

Auch ist es möglich, dass als Teil eines erfindungsgemäßen Verfahrens ein oder mehrere Schritte als manuelle Funktionen ausgeführt werden. Dabei ist es möglich, dass eine Sicherheitskontrolle dieser manuellen Ausführung erfolgt. Insbesondere Servicefunktionen oder Servicebewegungen der einzelnen Rollen können auf diese Weise durchgeführt werden.

Es kann von Vorteil sein, wenn bei einem erfindungsgemäßen Verfahren die Anzeigeschritte auf einer Anzeigevorrichtung in Form eines berührungsempfindlichen Displays erfolgen. Unter einem berührungsempfindlichen Display ist zum Beispiel ein sogenannter Touchscreen zu verstehen. Dies führt zu einer weiteren Vereinfachung einer entsprechenden Kontrollvorrichtung und damit auch der Durchführung des erfindungsgemäßen Verfahrens. Dementsprechend kann die Konstruktion für das notwendige Bauvolumen für die Anzeigevorrichtung weiter reduziert werden. Separate, manuelle Eingabemöglichkeiten, zum Beispiel mechanische Tastaturen, können auf diese Weise vermieden werden. Auch wird gleichzeitig für die Eingabe die gleiche erfindungsgemäße Korrelation zur Verfügung gestellt, wie sie für die Anzeige der Betriebsparameter vorhanden ist. Dies führt zur gleichen Erhöhung der Sicherheit, sodass mit höherer Wahrscheinlichkeit auch an der richtigen Stelle für die richtige Funktionseinheit die gewünschte Änderung der Betriebsparameter eingebbar wird.

Ebenfalls von Vorteil ist es, wenn bei einem Verfahren gemäß dem voranstehenden Absatz bei der Anwahl eines angezeigten Betriebsparameters ein Tastaturfeld auf der Anzeigevorrichtung angezeigt wird. Das Tastaturfeld ist insbesondere eine Zehnertastatur mit Zifferntasten von 0 bis 9. Die Anzeige erfolgt vorzugsweise in örtlicher Nähe, also neben oder in der Nähe der angezeigten Betriebsparameter. Das Anwählen des Betriebsparameters erfolgt zum Beispiel durch eine Berührung mit dem Finger für den angezeigten Betriebsparameter. Anschließend wird dieser Betriebsparameter sozusagen aktiviert und ein Tastaturfeld erscheint als Kontextmenü auf der Anzeigevorrichtung neben diesem Betriebsparameter. Mittels des Tastaturwertes kann nun ein Sollwert für diesen Betriebsparameter zur Verfügung gestellt werden. Damit können neue Kontrollwerte als Sollwerte zur Verfügung gestellt werden, um einen aktiven Regeleingriff durch ein erfindungsgemäßes Verfahren zu ermöglichen.

Ein weiterer Vorteil wird erzielt, wenn bei einem erfindungsgemäßen Verfahren neben dem wenigstens einen erfassten und angezeigten Betriebsparameter eine Farbcodierung dieses Betriebsparameters angezeigt wird. Insbesondere kann diese Farbcodierung eine Korrelation zwischen einem Istwert und einem Sollwert enthalten. So kann zum Beispiel die Verwendung von Markerfarben wie roten oder grünen Farben die Qualität der aktuellen Betriebssituation dargestellt werden. Befindet sich die Farbcodierung im grünen Bereich, so muss keine Änderung erfolgen. Befindet sich die Farbcodierung in einem roten Bereich, so wird intuitiv das Bedienpersonal auf eine Problemsituation bei der Kontrolle der Wickelvorrichtung hingewiesen. Ein einfacherer, schnellerer und vor allem sichererer Eingriff wird auf diese Weise gewährleistet. Zum Beispiel kann auch eine farbliche Bewertung des eingegebenen bzw. des erfassten Betriebsparameters zur Verfügung gestellt werden. Selbstverständlich kann auch eine Anzeige eines Schiebereglers und damit eine fließende Farbveränderung für die farbliche Bewertung Verwendung finden. Die Veränderung kann sich zum Beispiel auf eine Variation der Farbtiefe oder der Sättigung beziehen. Die Variation kann dabei im Bereich zwischen 0 und 100% erfolgen.

Ebenfalls von Vorteil ist es, wenn bei einem erfindungsgemäßen Verfahren eine Eingabe eines Sollwerts für den wenigstens einen erfassten und angezeigten Betriebsparameter erfolgt. Wie bereits an mehreren Stellen erläutert worden ist, kann auf diese Weise ein aktiver Regelungseingriff zur Verfügung gestellt werden. Selbstverständlich beinhaltet das erfindungsgemäße Verfahren dann zusätzlich einen Vergleichsschritt zwischen dem Istwert und dem eingegebenen Sollwert des erfassten Betriebsparameters. Somit kann eine Steuerung, insbesondere eine Regelung für die gesamte Wickelvorrichtung bzw. für separate Funktionseinheiten zur Verfügung gestellt werden. Die Eingabe erfolgt vorzugsweise über ein berührungsempfindliches Display, welches als Touchscreen bereits erläutert wurde.

Vorteilhaft ist es darüber hinaus, wenn bei einem erfindungsgemäßen Verfahren die Eingabe des Sollwertes in der gleichen Anzeigeebene erfolgt wie die Anzeige des wenigstens einen erfassten und angezeigten Betriebsparameters. Mit anderen Worten muss keine Änderung in der Anzeigedarstellung durchgeführt werden. Vielmehr bleibt sogar während der Eingabe eines Sollwerts für einen Betriebsparameter die Sichtbarkeit der weiteren angezeigten Betriebsparameter hinsichtlich ihrer Istwerte vorhanden. Die Eingabe eines neuen Sollwertes behindert dementsprechend nicht die Sichtbarkeit der aktuellen Betriebssituation. Dies führt zu einer weiteren Erhöhung der Sicherheit eines erfindungsgemäßen Verfahrens. Darüber hinaus erfolgt das Eingeben des Sollwertes schneller, da kein Umschalten der Anzeige notwendig ist.

Ebenfalls von Vorteil kann es sein, wenn bei einem Verfahren zusätzlich eine Eingabe einer Auswahl und einer Anordnung von Wickelhülsen auf einer Wickelwelle der Wickelvorrichtung erfolgt. Unter Wickelhülsen sind die Trägermaterialien zu verstehen, welche nach dem Beenden des Aufwickelns der Folie die jeweilige Folienrolle als Produkt herstellt. Die Wickelhülsen sind dementsprechend vorzugsweise hohlzylindrisch ausgebildet und werden auf der Wickelwelle der Wickelvorrichtung aufgebracht. Um mit höherer Geschwindigkeit und höherem Durchsatz wickeln zu können, werden vorzugsweise zwei oder sogar mehr Wickelhülsen gleichzeitig auf einer dementsprechend länger ausgebildeten Wickelwelle angeordnet. Für unterschiedliche nachfolgende Produktionsarten sind unterschiedliche Breiten der Wickelhülsen notwendig. Die freie Variierbarkeit dieser Wickelhülsen kann erfindungsgemäß automatisiert erfolgen. So kann ebenfalls über die Anzeigevorrichtung die Anordnung und die Auswahl der Wickelhülsen hinsichtlich ihrer Breite durchgeführt werden. Insbesondere erfolgt die Auswahl aus einem Magazin mit wenigstens zwei Fächern, wobei in jedem Fach separat eine definierte Wickelhülse hinsichtlich einer bestimmten Breite angeordnet ist. Es erfolgt also eine automatische Stückelung von wenigstens einer Wickelhülse, die ein Aufschieben der Wickelhülsen von Hand ersetzt. Die Ausführung erfolgt automatisch in der Maschine. Typische Breiten für Wickelhülsen liegen zum Beispiel im Bereich zwischen ca. 400 und ca. 1000 mm.

Vorteilhaft ist es ebenfalls, wenn bei einem Verfahren wenigstens einer der folgenden Betriebsparameter zumindest einer Funktionseinheit erfasst und angezeigt wird:
- Drehzahl oder Umfangsgeschwindigkeit einer Förderwalze
- Voreilung zwischen zwei benachbarten Förderwalzen
- Anpresskraft einer Förderwalze
- Umschlingungswinkel einer Förderwalze
- Bahnzug auf einer Förderwalze

Die Drehzahl der Förderwalze ist durch einen entsprechenden Antriebsmotor vorgebbar.

Eine Drehzahlkontrolle kann über ein Abgreifen am Motor oder über separate Sensormittel erfolgen. Die Voreilung ist ein Drehzahlunterschied hinsichtlich der geförderten Geschwindigkeit der Folie zwischen zwei benachbarten Förderwalzen. Auf diese Weise wird die Vorspannung in dem geförderten Produkt, nämlich der Folie, hergestellt. Wird über eine Förderwalze eine Anpressung, zum Beispiel auf der aufgewickelten Folienrolle zur Verfügung gestellt, so kann über Verstellzylinder oder Verstellmotoren auch die Anpresskraft dieser Förderwalze als erfindungsgemäßer Betriebsparameter dienen. Für eine winkelige Veränderung der Förderwalze, welche ebenfalls über Stellmotoren erfolgen kann, können auch Umschlingungswinkel variiert werden.

Ebenfalls Gegenstand der vorliegenden Erfindung ist eine Kontrollvorrichtung für die Kontrolle einer Wickelvorrichtung, aufweisend eine Kontrolleinheit, welche für die Ausführung eines erfindungsgemäßen Verfahrens ausgebildet ist. Dementsprechend bringt eine erfindungsgemäße Kontrollvorrichtung die gleichen Vorteile mit sich, wie sie ausführlich mit Bezug auf ein erfindungsgemäßes Verfahren erläutert worden sind. Insbesondere weist die Kontrollvorrichtung bereits die Anzeigevorrichtung auf, welche vorzugsweise ein berührungsempfindliches Display, also einen Touchscreen, aufweist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
Fig. 1 eine erste Darstellung eines erfindungsgemäßen Verfahrens,
Fig. 2 eine zweite Darstellung eines erfindungsgemäßen Verfahrens und
Fig. 3 eine dritte Darstellung eines Verfahrens.

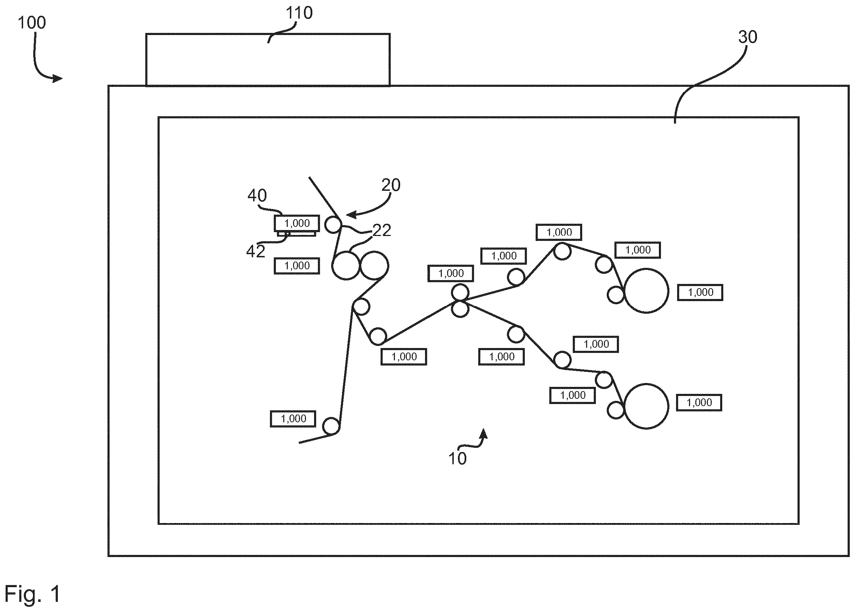

In Fig. 1 ist schematisch eine Ausführungsform einer erfindungsgemäßen Kontrollvorrichtung 100 dargestellt. Diese weist eine Anzeigevorrichtung 30 und eine Kontrolleinheit 110 auf. In der Kontrolleinheit 110 ist eine Recheneinheit zur Ausführung eines Computerprogrammprodukts vorhanden, welches die einzelnen Verfahrensschritte steuert.

Wie in Fig. 1 gut zu erkennen ist, ist auf der Anzeigevorrichtung 30, welche hier als berührungsempfindliches Display, also als Touchscreen, ausgebildet ist, eine schematische Darstellung der Wickelvorrichtung 10 zu erkennen. Diese weist eine Vielzahl von Funktionseinheiten 20 auf, die hier alle als Förderwalzen 22 ausgebildet sind. Zwischen den einzelnen Förderwalzen 22 ist schematisch der Zugverlauf der Folie zu erkennen. Hier erfolgt ein Aufwickeln rechtsauf für zwei Wickelrollen.

Ebenfalls ist in Fig. 1 gut zu erkennen, dass in räumlicher Nähe zu einer Mehrzahl der Förderwalzen 22 und damit für eine Vielzahl von Funktionseinheiten 20 ein Betriebsparameter 40 angezeigt wird. Dieser Betriebsparameter 40 stellt den aktuell erfassten Istwert dieses Betriebsparameters 40 hinsichtlich der jeweiligen Funktionseinheit 20 dar. Auch ist oben links bei einer Anzeige eines Betriebsparameters 40 eine Farbcodierung 42 zu erkennen, welche als Schieberegler eine entsprechende Darstellung im Vergleich zu Sollwerten offenbart. Auch kann auf diese Weise eine Darstellung der aktuellen Arbeitsauslastung erfolgen.

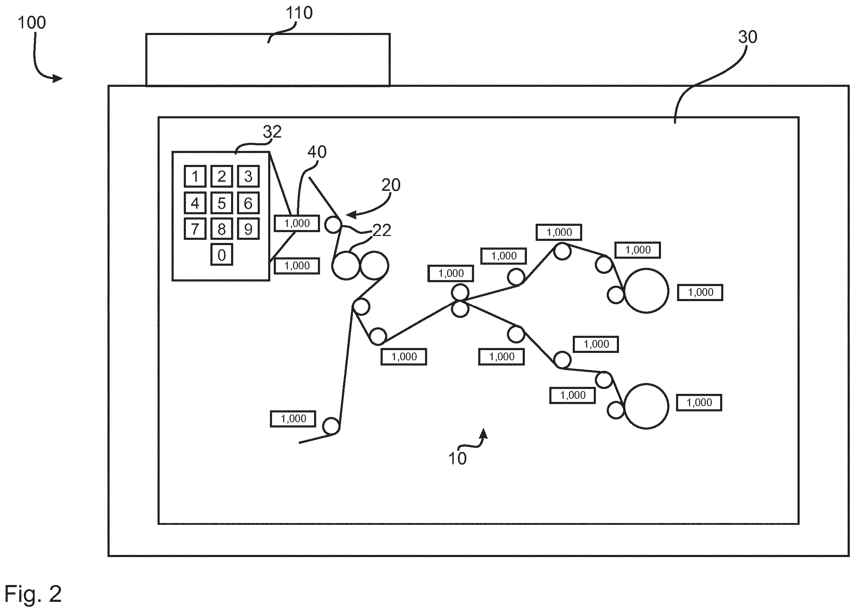

Fig. 2 zeigt neben der passiven Kontrollmöglichkeit, wie sie bereits Fig. 1 zeigt, eine Möglichkeit eines aktiven Regeleingriffs. Hier wurde der Betriebsparameter 40 oben links für die zugehörige Funktionseinheit 20, also eine Förderwalze 22, angewählt. Das Anwählen erfolgt durch Berühren des berührungsempfindlichen Displays der Anzeigevorrichtung 30 auf dem jeweiligen Betriebsparameter 40. Dieses Berühren führt zum Öffnen eines Kontextmenüs, welches hier als Tastaturfeld 32 mit Zehnertastatur von 0 bis 9 ausgebildet ist. Jetzt kann eine Eingabe eines Sollwertes erfolgen, welcher für eine nachfolgende Regelung der Kontrollvorrichtung 100 für die Wickelvorrichtung 10 zur Verfügung gestellt wird. Auch ist die Verwendung von PullDown Menüs denkbar, welche eine Auswahlbeschränkung auf vorab definierte Auswahlmöglichkeiten beinhalten.

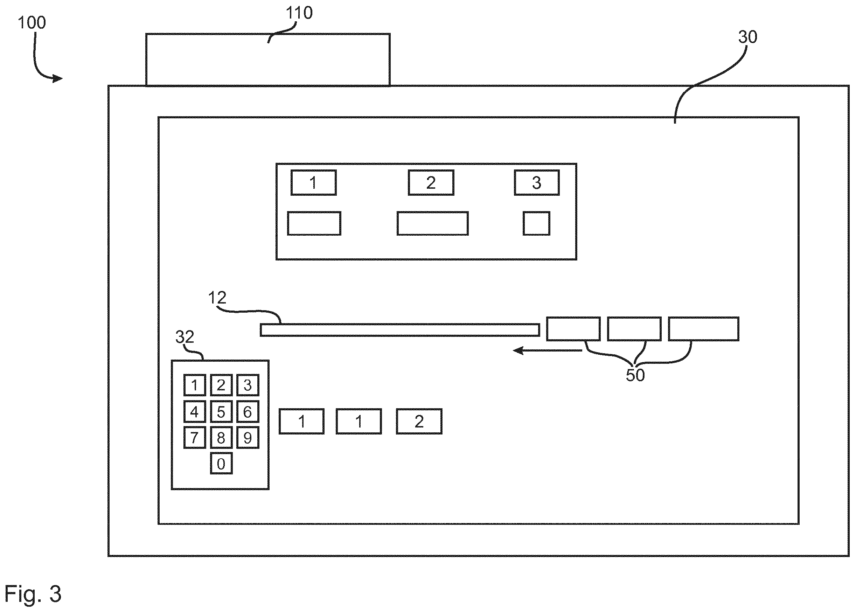

In Fig. 3 ist ein Teilaspekt einer Verfahrensausbildung dargestellt. Hier ist auf der Anzeigevorrichtung 30 schematisch oben ein Magazin mit drei separaten Fächern (Ziffern 1 bis 3) dargestellt. Jedes dieser drei Magazine weist eine bestimmte Breite einer Wickelhülse 50 auf. Auch ist schematisch eine Wickelwelle 12 dargestellt, welche von rechts mit drei Wickelhülsen 50 unterschiedlicher Breite bestückt wird. Unterhalb der Wickelwelle 12 sind drei Eingabefelder vorgesehen, die mithilfe eines Tastaturfelds 32 mit der jeweiligen Magazinnummer (1 bis 3) gefüllt werden können. Auf diese Weise kann hier die Anzahl und auch die Art der Paarung der Wickelhülsen 50 vorgegeben werden. Das Aufschieben dieser entsprechend definierten Paarung erfolgt automatisch auf der Wickelvorrichtung 10.

Die voranstehende Erläuterung der Ausführungsformen beschreibt die vorliegende Erfindung ausschließlich im Rahmen von Beispielen.

### Bezugszeichenliste

- 10: Wickelvorrichtung
- 12: Wickelwelle
- 20: Funktionseinheit
- 22: Förderwalze
- 30: Anzeigevorrichtung
- 32: Tastaturfeld
- 40: Betriebsparameter
- 42: Farbcodierung
- 50: Wickelhülse

- 100: Kontrollvorrichtung
- 110: Kontrolleinheit

## Patentansprüche

1. Verfahren für die Kontrolle einer Wickelvorrichtung (10), aufweisend die folgenden Schritte:
- Anzeigen einer schematischen Darstellung von Funktionseinheiten (20) der Wickelvorrichtung (10) auf einer Anzeigevorrichtung (30),
- Erfassen wenigstens eines Betriebsparameters (40) zumindest einer Funktionseinheit (20) der Wickelvorrichtung (10),
- Anzeigen des wenigstens einen erfassten Betriebsparameters (40) auf der Anzeigevorrichtung (30) neben der schematischen Darstellung der zugehörigen Funktionseinheit (20),
wobei das Anzeigen des wenigstens einen erfassten Betriebsparameters (40) auf der Anzeigevorrichtung (30) neben der schematischen Darstellung der zugehörigen Funktionseinheit (20) auf ein und derselben Anzeigenebene erfolgt,
**dadurch gekennzeichnet, dass**
wenigstens einer der folgenden Betriebsparameter zumindest einer Funktionseinheit (20) erfasst und angezeigt wird:
- Drehzahl einer Förderwalze (22)
- Voreilung zwischen zwei benachbarten Förderwalzen (22)
- Anpresskraft einer Förderwalze (22)
- Umschlingungswinkel einer Förderwalze (22),
wobei die Voreilung ein Drehzahlunterschied hinsichtlich der geförderten Geschwindigkeit einer Folie zwischen zwei benachbarten Förderwalzen ist.

2. Verfahren nach Anspruch 1,
**dadurch gekennzeichnet,**
**dass** die Anzeigeschritte auf einer Anzeigevorrichtung (30) in Form eines berührungsempfindlichen Displays erfolgen.

3. Verfahren nach Anspruch 2,
**dadurch gekennzeichnet,**
**dass** bei der Anwahl eines angezeigten Betriebsparameters (40) ein Tastaturfeld (32) auf der Anzeigevorrichtung (30) angezeigt wird.

4. Verfahren nach einem der vorangegangenen Ansprüche,
**dadurch gekennzeichnet,**
**dass** neben dem wenigstens einen erfassten und angezeigten Betriebsparameter (40) eine Farbcodierung (42) dieses Betriebsparameters (40) angezeigt wird.

5. Verfahren nach einem der vorangegangenen Ansprüche,
**dadurch gekennzeichnet,**
**dass** eine Eingabe eines Sollwertes für den wenigstens einen erfassten und angezeigten Betriebsparameter (40) erfolgt.

6. Verfahren nach Anspruch 5,
**dadurch gekennzeichnet,**
**dass** die Eingabe des Sollwertes in der gleichen Anzeigeebene erfolgt, wie die Anzeige des wenigstens einen erfassten und angezeigten Betriebsparameters (40).

7. Verfahren nach einem der vorangegangenen Ansprüche,
**dadurch gekennzeichnet,**
**dass** zusätzlich eine Eingabe einer Auswahl und einer Anordnung von Wickelhülsen (50) auf einer Wickelwelle (12) der Wickelvorrichtung (10) erfolgt.

8. Verfahren nach einem der vorangegangenen Ansprüche,
**dadurch gekennzeichnet,**
**dass** Sensoreinheiten vorgesehen sind, um das Erfassen von Betriebsparametern (40) zu ermöglichen.

9. Kontrollvorrichtung (100) für die Kontrolle einer Wickelvorrichtung (10), aufweisend eine Kontrolleinheit (110) und eine Anzeigevorrichtung (30) zum Anzeigen einer schematischen Darstellung von Funktionseinheiten (20) der Wickelvorrichtung (10) sowie wenigstens eines erfassten Betriebsparameters (40), wobei die Kontrollvorrichtung (100) zur Ausführung eines erfindungsgemäßen Verfahrens gemäß den Ansprüchen 1 bis 8 ausgebildet ist.

## Claims

1. Method for controlling a winding device (10), having the following steps:
- displaying a schematic representation of functional units (20) of the winding device (10) on a display device (30),
- detecting at least one operating parameter (40) of at least one functional unit (20) of the winding device (10),
- displaying the at least one detected operating parameter (40) on the display device (30) next to the schematic representation of the corresponding functional unit (20),
wherein the display of the at least one detected operating parameter (40) on the display device (30) is next to the schematic representation of the corresponding functional unit (20) on one and the same display level, **characterized in that** at least one of the following operating parameters of at least one functional unit (20) is detected and displayed:
- rotational speed of a supply roller (22),
- leading between two neighboring supply rollers (22),
- contact pressure of a supply roller (22),
- wrap angle of a supply roller (22),
wherein the lead is a difference in speed with regard to the conveyed speed of a film between two neighboring supply rollers.

2. Method according to claim 1,
**characterized in that,**
the display steps take place on a display device (30) in form of a touch-sensitive display.

3. Method according to claim 2,
**characterized in that,**
during the selection of a displayed operating parameter (40) a key pad (32) is shown on the display device (30).

4. Method according to any one of the preceding claims,
**characterized in that,**
next to the at least one detected and displayed operating parameter (40) a color coding (42) of this operating parameter (40) is displayed.

5. Method according to any one of the preceding claims,
**characterized in that,**
an input of a desired value occurs for the at least one detected and displayed operating parameter (40).

6. Method according to claim 5,
**characterized in that,**
the input of the desired value occurs in the same display plane as the display of the at least one detected and displayed operating parameter (40).

7. Method according to any one of the preceding claims,
**characterized in that,**
in addition an input of a selection and an arrangement of winding sleeves (50) on a winding shaft (12) of the winding device (10) occurs.

8. Method according to any one of the preceding claims,
**characterized in that,**
sensor units are provided in order to enable the detection of operating parameters (40).

9. Control device (100) for controlling a winding device (10), having a control unit (110) and a display device (30) for displaying a schematic representation of functional units (20) of the winding device (10) and at least one detected operating parameter (40), wherein the control device (100) is configured for carrying out a method of the invention according to claims 1 to 8.

## Revendications

1. Procédé pour le contrôle d'un dispositif de bobinage (10) présentant les étapes suivantes :
- l'affichage d'une représentation schématique d'unités fonctionnelles (20) du dispositif de bobinage (10) sur un dispositif d'affichage (30),
- la détection d'au moins un paramètre de fonctionnement (40) d'au moins une unité fonctionnelle (20) du dispositif de bobinage (10),
- l'affichage de l'au moins un paramètre de fonctionnement (40) détecté sur le dispositif d'affichage (30) à côté de la représentation schématique de l'unité fonctionnelle (20) afférente,
dans lequel l'affichage de l'au moins un paramètre de fonctionnement (40) détecté sur le dispositif d'affichage (30) à côté de la représentation schématique de l'unité fonctionnelle (20) afférente est effectué sur un même plan d'affichage, **caractérisé en ce qu'**au moins un des paramètres de fonctionnement suivants d'au moins une unité fonctionnelle (20) est détecté et affiché :
- la vitesse de rotation d'un rouleau de transport (22)
- l'avance entre deux rouleaux de transport (22) contigus
- la force de pressage d'un rouleau de transport (22)
- l'angle de bobinage d'un rouleau de transport (22),
dans lequel l'avance est une différence de vitesse de rotation en ce qui concerne la vitesse transportée d'un film entre deux rouleaux de transport contigus.

2. Procédé selon la revendication 1,
**caractérisé en ce que**
les étapes d'affichage sur un dispositif d'affichage (30) sont effectuées sous la forme d'un écran tactile.

3. Procédé selon la revendication 2,
**caractérisé en ce que**
un clavier (32) sur le dispositif d'affichage (30) est affiché lors du choix d'un paramètre de fonctionnement (40) affiché.

4. Procédé selon l'une quelconque des revendications précédentes,
**caractérisé en ce que**
un code couleur (42) de ce paramètre de fonctionnement (40) est affiché à côté de l'au moins un paramètre de fonctionnement (40) détecté et affiché.

5. Procédé selon l'une quelconque des revendications précédentes,
**caractérisé en ce que**
une saisie d'une valeur de consigne est effectuée pour l'au moins un paramètre de fonctionnement (40) détecté et affiché.

6. Procédé selon la revendication 5,
**caractérisé en ce que**
la saisie de la valeur de consigne est effectuée dans le même point d'affichage que l'affichage de l'au moins un paramètre de fonctionnement (40) détecté et affiché.

7. Procédé selon l'une quelconque des revendications précédentes,
**caractérisé en ce que**
une saisie d'une sélection et d'un ensemble de mandrins (50) sur un arbre de bobinage (12) du dispositif de bobinage (10) est en outre effectuée.

8. Procédé selon l'une quelconque des revendications précédentes,
**caractérisé en ce que**
des unités de détection sont prévues afin de permettre la détection de paramètres de fonctionnement (40).

9. Dispositif de contrôle (100) pour le contrôle d'un dispositif de bobinage (10) présentant une unité de contrôle (110) et un dispositif d'affichage (30) pour l'affichage d'une représentation schématique d'unités fonctionnelles (20) du dispositif de bobinage (10) ainsi qu'au moins un paramètre de fonctionnement (40) détecté, dans lequel le dispositif de contrôle (100) est configuré pour l'exécution d'un procédé selon l'invention selon les revendications 1 à 8.
